# EUROPEAN PATENT APPLICATION

(11) **EP 1 255 360 A1**
(43) Date of publication of application: **06.11.2002**
(21) Application number: 01110776.0
(22) Date of filing: 03.05.2001
(51) Int. Cl.: H04B 1/38, H04M 1/02

(54) **Battery with oscillator for mobile terminal**

(71) Applicant: Sony International (Europe) GmbH, 10785 Berlin (DE)
(72) Inventor: Winkler, Gregor, Digital Telecommunications Europe, 85609 Aschheim (DE)
(74) Representative: Körber, Martin, Dipl.-Phys.

(57) **Abstract**

A mobile terminal (3) of a wireless telecommunication system is provided, the mobile terminal (2) comprising a main body (2) and a battery pack (1) connectable to said main body (2), wherein said battery pack (1) comprises at least an oscillator device (41; 51; 61; 71) providing a frequency signal and information transmission control for controlling the transmission of information from said battery pack (1) to said main body (2), whereby said information transmission control transmits a frequency information signal (F) on the basis of said frequency signal outputted from said oscillator device (41; 51; 61; 71) via at least one first physical channel to a baseband chip (42) comprised in said main body (2).

## Description

The present invention relates to a mobile terminal of a wireless telecommunication system, the mobile terminal comprising at least a main body and a battery pack connectable to said main body, and more specifically to the provision of frequency information in said mobile terminal.

A typical mobile terminal is adapted for communication in a wireless communication system e.g. the GSM or the UMTS system. The mobile terminal either communicates directly with another portable mobile terminal or with a base station of the wireless telecommunication system. Typical transmission standards are e.g. DECT for in-house systems and GSM or UMTS for global telecommunication systems.

Due to its mobile character the mobile terminal is normally powered by a rechargeable battery pack which is removably connected to a main body of the mobile terminal.

In order to stay synchronised to the global telecommunication systems, as well as for internal and external control and other functions of the mobile terminal (e.g. to clock a baseband chip / main processor of the mobile terminal), it is very important to provide reliable frequency information inside the main body of the mobile terminal.

Therefore, in general at least two oscillator devices are provided within the main body of a mobile terminal:
A first highly accurate oscillator device (e.g. a large precise quartz device) which is a fast (e.g. 13 MHz) device used mainly during data transmission and receipt and has a relatively high energy consumption. The first oscillator device of the mobile terminal often is further used for analog/digital conversion, more complex calculations (e.g. graphic calculation for the display) and for synchronisation with a network of the global telecommunication system.
A second less accurate oscillator device (e.g. an ordinary less precise low-energy quartz device) being in continuous use when the mobile terminal is switched on. Said second oscillator device normally is used to provide a frequency signal as a clock signal to a baseband chip (main processor) of the mobile terminal, e.g. during the power safe mode.

The second oscillator device usually is an ordinary quartz device operating in the low frequency range of e. g. several kHz such as a 32 kHz crystal for example. These quartz devices are not too expensive and consume relatively little energy compared to the highly accurate quartz devices usually used for the first oscillator devices.
However, in modern mobile terminals, the space limitations and requirements of low power consumption and good battery-power management are increasing.

For a real time clock (RTC) which helps to enable additional features of the mobile terminal like world clock, alarm and organiser a frequency information is needed.
Instead of using a conventional RTC, counter values of a frequency counter might be used.

The input clock frequency for real time clocks or frequency counters normally is provided by a third oscillator device such as an ordinary slow (32 kHz) quartz device similar to the quartz devices used for the second oscillator device.

Since the real time clocks or the frequency counters used to generate clock information should not stop working when the battery pack is removed from the main body of the mobile terminal and therefore the power supply to the mobile terminal is interrupted, they are preferably built-in into the battery pack of the mobile terminal.

US 5,608,306 discloses a system comprising a rechargeable battery pack including a real time clock and an application, wherein the battery pack is adapted to communicate real time data to said application. Said real time data is generated based on a counter value counting the oscillations of a slow 32 kHz crystal element provided in said battery pack. It is further proposed to provide an additional pin both on the battery pack and the application to perform such a transmission of real time data.

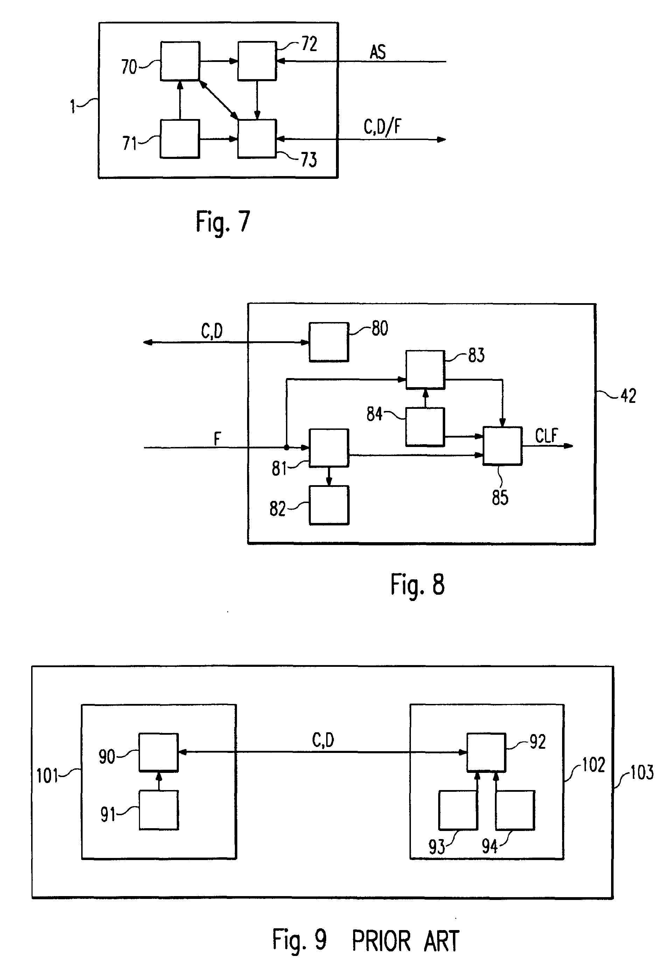

Figure 9 shows the principle of the state of the art technology.
A mobile terminal 103 comprises a battery pack 101 and a main body 102.
A first highly accurate oscillator device 94 is included in the main body 102 of the mobile terminal 103. Said first oscillator device 94 is a fast highly precise 13 MHz quartz device and used during data transmission and receipt, for analog/digital conversion, for more complex calculations (e.g. graphic calculation for the display) and for synchronisation with a network of the global telecommunication system.
A second, less accurate oscillator device 93 and a baseband chip 92 (main processor of the mobile terminal 103) are included in the main body 102 of the mobile terminal 103.

Said second oscillator device 93 is used during power safe mode (when the first oscillator device 94 is not needed).
A battery management chip 90 and a third oscillator device 91 are included in the battery pack 101. Furthermore, a real time clock circuitry (not shown) is included in the battery management chip 90. The third oscillator device 91 is adapted to provide a frequency signal to the real time clock circuitry in the battery management chip 90 (e.g. to generate a clock information signal).
Both the second and the third oscillator devices 93 and 91 usually are similar slow quartz devices and provide e.g. a frequency of 32.768 kHz.
The baseband chip 92 is clocked by a frequency signal received from either the first or second oscillator device and is adapted to control e.g. RF circuitry, display, audio circuitry and power management functionality of the main body 102 of the mobile terminal 103. Furthermore, the baseband chip 92 can send commands C to and receive data D from the battery management chip 90 via an additional pin provided both on the battery pack 101 and the main body 102. Said data can contain real time data which is provided by the real time clock included in the battery pack 101.

Thus, in the known mobile terminal 103, three oscillator devices for generating frequency information are provided.

This results in a noticeable consumption of space and energy. Besides this, the quartz devices widely used as oscillator devices are relatively large and expensive in comparison with ordinary electrical components such as diodes or capacities.

According to another state of the art technology (not shown) the second oscillator device described in Fig. 9 is additionally used to clock a real time clock (or frequency counter) built-in inside the main body of the mobile terminal, wherein an additional buffer battery is provided in the main body of the mobile terminal to power the second oscillator device when the battery pack is removed from the main body of the mobile terminal. Therefore, no third oscillator device is needed in the battery pack.

With backup batteries it is a disadvantage that they are both bulky and expensive. Furthermore, known backup batteries contain harmful materials and thus have to be disposed separately.

It is the object of the present invention to provide a mobile terminal of a wireless telecommunication system, the mobile terminal comprising at least a main body and a battery pack connectable to said main body, wherein frequency information is provided in said mobile terminal with reduced consumption of space and energy, while the number of parts and thus the costs of manufacturing said mobile terminal are reduced at the same time.

The above object is achieved by a mobile terminal of a wireless telecommunication system according to claim 1, the mobile terminal comprising a main body and a battery pack connectable to said main body, wherein said battery pack comprises at least an oscillator device providing a frequency signal and information transmission control means for controlling the transmission of information from said battery pack to said main body, whereby said information transmission control means transmits a frequency information signal on the basis of said frequency signal outputted from said oscillator device via at least one first physical channel from said battery pack to a baseband chip comprised in said main body.

According to the present invention a mobile terminal of a wireless telecommunication system can be built with an even smaller construction and with less costs as a frequency information signal is transmitted from said battery pack to the baseband chip (main processor) of the main body and thus no additional frequency generating means like a oscillator device has to be provided within the main body of the mobile terminal to provide a clock signal to said baseband chip.
It is a further advantage that no additional backup battery is required in the main body of the mobile terminal, too.

According to a preferred embodiment of the present invention, a physical data channel for the transmission of commands/data and a physical frequency channel for the transmission of the frequency information signal between the main body and the battery pack are provided.

As two separate channels for the transmission of command/data and the frequency information signal between the battery pack and the main body of the mobile terminal are provided, the frequency information signal can be constantly transmitted without distortion by command/data information.
Thus, a parallel data transmission of command/data and the frequency information signal between the battery pack and the main body of the mobile terminal is possible.

Further advantageously, said information transmission control means further comprises a transfer gate comprised in said battery pack, said transfer gate connecting said oscillator device to said physical frequency channel.

As a transfer gate connecting the oscillator device to said physical frequency channel is provided, the output of the frequency information signal can be started/stopped by respectively connecting/disconnecting the oscillator device to/from said physical frequency channel.

According to a further aspect of the invention, said information transmission control means further includes a communication controller for receiving commands from said baseband chip and sending data to said baseband chip via said physical data channel.

By providing an communication controller it is e.g. possible to determine the condition of the battery pack of the mobile terminal at any time the battery pack is connected to the main body. Furthermore, the battery pack can be influenced by sending commands from the main body to the communication controller.

Advantageously, said communication controller is further adapted to transmit the frequency information signal to said baseband chip contained in said main body via said physical frequency channel.

Thus, further to the communication controller no additional components have to be provided in the battery pack of the mobile terminal for the transmission of the frequency information signal from the battery pack to the main body of the mobile terminal.

Further advantageously, said information transmission control means further comprises a transfer gate comprised in said battery pack, said transfer gate connecting said oscillator device to said physical frequency channel, wherein said transfer gate is controlled by said communication controller.

As the transfer gate connecting the oscillator device to said physical frequency channel is controlled by the communication controller, the transfer gate can be remotely controlled by the baseband chip via the communication controller or by a program stored in the communication controller.

According to a further preferred embodiment of the present invention, the frequency information signal is transmitted together with command/data via a physical data/frequency channel.

Therefore, the number of pin contacts between the battery pack and the main body can be reduced as only one physical channel is necessary for the transmission of both command/data and the frequency information signal between the battery pack and the main body of the mobile terminal.
Thus, a serial data transmission of command/data and the frequency information signal between the battery pack and the main body of the mobile terminal is possible.

Further advantageously, said information transmission control means includes a communication controller for receiving commands from said baseband chip and sending data to said baseband chip via said physical data/frequency channel.

Thus, the condition of the battery pack can be determined by the main body of the mobile terminal at any time the battery pack is connected to the main body and outputted to the user. Furthermore, the battery pack can be influenced by sending commands from the main body to the communication controller.

Advantageously, said information transmission control means further comprises a switch selectively connecting said oscillator device and said communication controller to said physical data/frequency channel.

As a switch selectively connecting said oscillator device and said communication controller to said physical data/frequency channel is provided, both the frequency information signal and command/data can be transmitted sequentially via a single physical channel.
It is mentioned that during normal use the switch preferably will connect the oscillator device to the physical data/frequency channel only after receiving a command from the baseband chip included in the main body of the mobile terminal.

According to a further aspect of the present invention, said information transmission control means further comprises a comparator for comparing the output of the oscillator device and the output of the switch and for switching said switch depending on the comparison result.

It is further advantageously that if said comparator detects a mismatch of the frequency information signal before and after the switch, the comparator switches said switch in such a way that the communication controller is connected to the physical data/frequency channel and the oscillator device is disconnected from said physical data/frequency channel.
This way the output of the frequency information signal can be stopped and new command/data can be send.

A further advantage is that, it can easily be detected if the battery pack is connected to or disconnected from the main body of the mobile terminal and thus a short circuit of the disconnected battery pack due to the outputted frequency information signal can be avoided.

According to a further embodiment of the present invention, the switch is controlled by switching means included in the main body of the mobile terminal.
Alternatively, the switch is controlled by said communication controller.

According to a further aspect of the present invention, further to the physical data/frequency channel a physical control channel for the transmission of additional signals is provided for connecting the main body and the battery pack, and the information transmission control means further includes a switch control, wherein said switch control is connected to said physical control channel and switches said switch according to the additional signal received from the main body via said physical control channel.

Thus, the output of the frequency information signal and data of the battery pack can be forcibly controlled by the main body of the mobile terminal.

Advantageously, the information transmission control means detects if the battery pack is disconnected from the main body and stops the output of the frequency information signal by the battery pack.

Therefore, energy can be saved and a short circuit of the disconnected battery pack due to the frequency information signal can be avoided.

As said above, according to the present invention, a frequency information signal is transmitted from the battery pack to the baseband chip in the main body of a mobile terminal. Thus, no additional frequency generating means like an additional oscillator device has to be provided to clock the baseband chip of the mobile terminal.

Furthermore, a frequency counter or a real time clock can be additionally provided in the battery pack, and a counter value of the frequency counter or a clock information of the real time clock can be transmitted from the battery pack to the main body of the mobile terminal, respectively.
Preferably, an ID code of the frequency counter is transmitted in addition to the counter value from the battery pack to the main body of the mobile terminal.

Further, an internal ring oscillator providing a low frequency signal to clock the baseband chip might be provided in the main body of the mobile terminal.
Said internal ring oscillator might also be used if the frequency information signal received by the baseband chip is interrupted due to chartering or an alternately transmission of the frequency information signal and command/data via one single physical channel.

As ring oscillators can be implemented in silicon chips, they can be miniaturised. Besides this, they are very cheap and consume very little energy.

Advantageously, said internal ring oscillator is implemented in said baseband chip included in said main body, said baseband chip further comprising a communication controller adapted to send and receive command/data to/from said battery pack, an input stage adapted to buffer the frequency information signal received from said battery pack, a real time clock circuit providing a clock signal based on an input frequency signal received from the battery pack, a switch and a comparator adapted to switch said switch, wherein said input stage is connected to said switch and said real time clock circuit, said internal ring oscillator is connected to said switch, and said comparator compares the output signal of the internal ring oscillator and the frequency information signal to switch said switch depending on the comparison result.

Further advantageously, the comparator detects whether the frequency information signal received from said battery pack is still present and correct and switches the switch respectively.

The number of parts and the consumption of space and expense of the mobile terminal can be further reduced wherein the reliability of the mobile terminal can be enhanced by implementing said ring oscillator with said baseband chip. The combination of the comparator and the switch guarantees that the best available frequency information signal is always provided to the baseband chip and for further processing.

Advantageously, the oscillator device is a quartz crystal and said baseband chip included in the main body is the main processor of the mobile terminal, further controlling an RF circuitry, display, audio circuitry and power management function of the mobile terminal.

In the following description, preferred embodiments of the present invention are discussed in detail regarding the accompanying drawings, in which
- Fig. 1: shows the front side of a typical main body of a mobile terminal realising the present invention,
- Fig. 2: shows the back side of the mobile terminal of Fig. 1,
- Fig. 3: shows the mobile terminal of Fig. 2, wherein the battery pack is removed from the main body,
- Fig. 4: shows a mobile terminal according to a first embodiment of the present invention,
- Fig. 5: shows a battery pack of a mobile terminal according to a second embodiment of the present invention,
- Fig. 6: shows a battery pack of a mobile terminal according to a third embodiment of the present invention,
- Fig. 7: shows a battery pack of a mobile terminal according to a fourth embodiment of the present invention,
- Fig. 8: shows a baseband chip included in a main body of a mobile terminal according to a preferred embodiment of the present invention,
- Fig. 9: shows a mobile terminal according to the prior art.

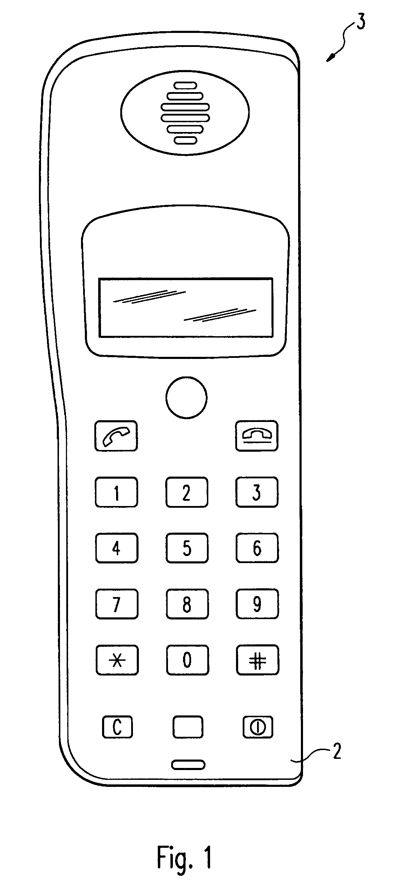

A mobile terminal 3 to which the present invention is applied is shown in Figs. 1, 2 and 3:

As shown in Fig. 1, the mobile terminal 3 comprises a main body 2 providing e.g. a display and buttons on its front side and at least a receiver, a microphone and a loudspeaker inside. In all of the embodiments of the present invention, a highly accurate oscillator device (not shown) is included in the main body 2 of the mobile terminal 3. Said highly accurate oscillator device normally is a fast (e.g. 13 MHz) quartz device and mainly used during data transmission for synchronisation with the network of a global telecommunication system.

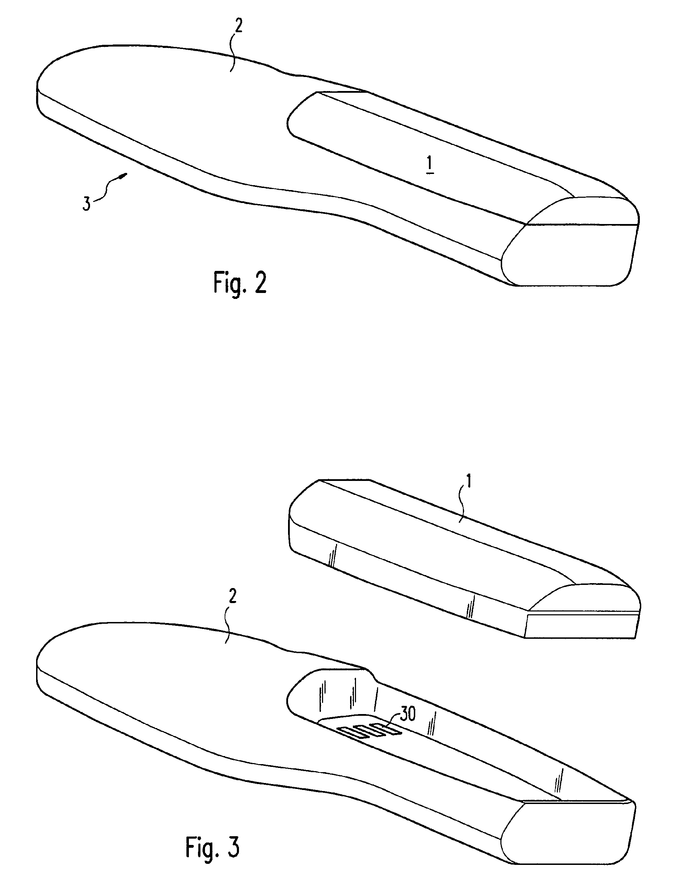

Normally, a battery pack 1 is removably located on the back side of the main body 2 of the mobile terminal 3 as shown in Figs. 2 and 3. Plural pin contacts 30 are provided both on the main body 2 and (not shown) on the battery pack 1 to result in plural electrical connections between the main body 2 and the battery pack 1, when the battery pack 1 is attached to the main body 2 as shown in Fig. 2.
Said pin contacts 30 are mainly used to transmit electrical power from the battery pack 1 to the main body 2 of the mobile terminal 3, but are also adapted to transmit information from the battery pack 1 to the main body 2.

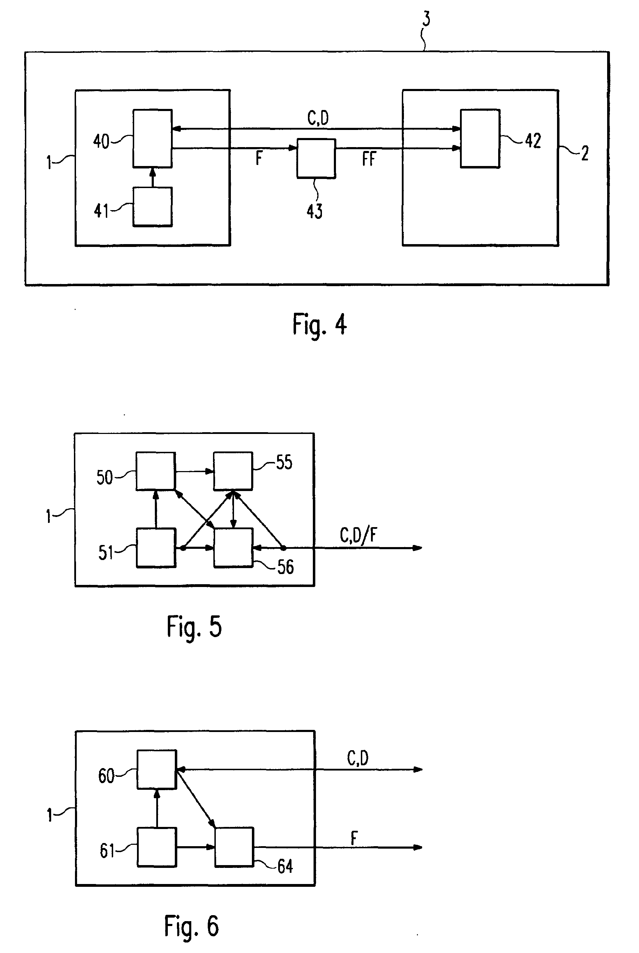

Figure 4 shows in detail the structure of a first embodiment of the present invention:
A communication controller 40 and an oscillator device 41 are included in the battery pack 1. The oscillator device 41 is adapted to provide a frequency signal to the communication controller 40. A real time clock circuitry is included in the communication controller 40 to generate a time information signal based on the frequency signal supplied from the oscillator device 41.
In this embodiment the oscillator device 41 is a slow 32.768 kHz quartz device.
The communication controller might be included in a battery management chip included in the battery pack.

A baseband chip 42 is included in the main body 2 of the mobile terminal 3. Said baseband chip 42 is the main processor of the mobile terminal 3 and adapted to control RF circuitry, display, audio circuitry and power management functionality. Furthermore, the baseband chip 42 can send commands C to and receive data D from the communication controller 40. The transfer of said data/commands D, C can actually be performed via a physical data channel using one contact 30 being provided on the battery pack 1 and one contact 30 being provided on the main body 2.

To provide frequency information to the baseband chip 42 located in the main body 2 of the mobile terminal 3, a frequency information signal F generated based on the output of the oscillator device 41 is transferred via a physical frequency channel from the battery pack 1 to the main body 2, wherein the transmission of the frequency information signal F is controlled by the communication controller 40.
The frequency information signal F transmitted from the battery pack 1 to the main body 2 is used to clock the baseband chip 42.
For the physical frequency channel, an additional contact 30 provided on the battery pack 1 and an additional contact 30 provided on the main body 2 of the mobile terminal 3 are used.
It is emphasised that according to the present invention the frequency information signal can be transmitted e.g. as an analog sinus-shaped wave or as a sampled digital signal.

To filter and/or modify the signal level of the frequency information signal F and thus to generate a new frequency information signal FF, a pulse shaping unit 43 is provided. Said pulse shaping unit 43 is only optional. The pulse shaping unit 43 can be implemented as a separate block or integrated in the communication controller 40 or the baseband chip 42.

A real time clock circuitry is included in the baseband chip 42 to generate a time information signal based on the frequency information signal FF received from the battery pack 1.

As no additional oscillator device to clock the baseband chip 42 has to be provided in the main body 2 of the mobile terminal 3 according to the present invention, costs due to the number of devices, energy and space can be saved.
Furthermore, there is no need to provide an additional buffer battery in the main body 2 of the mobile terminal 3.

Figures 5, 6 and 7 show different implementations of the battery pack 1 of the mobile terminal 3 according to the invention.
It is emphasised that in all of the following embodiments, in addition to the highly accurate fast oscillator device no additional oscillator device for clocking the real time clock included in the baseband chip 42 needs to be provided in the main body 2 of the mobile terminal 3.
The differences described in Figs. 5, 6, 7 mainly concern the communication between the battery pack 1 and the main body 2 of the mobile terminal 3.

Figure 5 shows a second embodiment of the present invention which is optimised with respect to the number of necessary connections between the battery pack 1 and the main body 2.

This number corresponds to the number of physical channels provided between the battery pack 1 and the main body 2 of the mobile terminal 3. The number of connections between the battery pack 1 and the main body 2 is very important as an additional electro-static-device protection has to be provided for each additional contact 30 being part of such a physical channel, both in the battery pack 1 and in the main body 2. Besides this, said contacts 30 are relatively error-prone (due to chartering etc.).

A communication controller 50 including a frequency counter is provided in the battery pack 1. The communication controller 50 is adapted for receiving commands C from and sending data D to a baseband chip included in the main body 2 of the mobile terminal 3. The frequency counter is adapted to count the frequency signal output by an oscillator device 51 being connected to said communication controller 50, and to output a counter value via the communication controller 50 to the main body 2 of the mobile terminal 3. A switch 56 is provided in the battery pack 1 respectively connecting the communication controller 50 and the oscillator device 51 to a single physical data/frequency channel.

In this preferred embodiment, a comparator 55 is additionally provided in the battery pack 1 for comparing the output of the oscillator device 51 and the output of the switch 56, whereby said comparator 55 is capable of switching the switch 56.

Alternatively said switch might be switched by the communication controller 50.

In a first state, the switch 56 connects the communication controller implemented in the communication controller 50 with the physical data/frequency channel. The main body 2 of the mobile terminal 3 thus can send commands C to and receive data D from the battery pack 1 via said physical data/frequency channel. One of said concrete commands C is the request of a frequency information signal F. After reception of this concrete command C the communication controller 50 indicates to the comparator 55 that the switch 56 should be switched for a certain period of time in a way, that the frequency information signal F is outputted via said physical data/frequency channel to the main body 2 of the mobile terminal 3.
Another concrete command C might be the request of a counter value and ID code of the frequency counter implemented in the communication controller 50.

Occasionally, the main body 2 of the mobile terminal 3 pulls the level (constant high or low) present on the physical data/frequency channel e.g. due to disconnection of the battery pack 1 as shown in Fig. 3, the comparator 55 detects a mismatch of the frequency information signal F before and after the switch 56 and changes the setting of the switch 56 so that the communication controller 50 is connected again to the physical data/frequency channel. The communication controller 50 will then go into a stand-by status and wait for incoming commands.

Thus, as no frequency information signal F is outputted via the physical data/frequency channel when the battery pack 1 is removed from the main body 2, the risk of a short circuit is reduced. Furthermore, no energy is wasted by unnecessarily outputting the frequency information signal F.

It is emphasised that the implementation of the comparator 55 is optional in the above described embodiment of the present invention.

Figure 6 shows a third embodiment of the present invention where two different physical channels for the transmission of command/data C, D and a frequency information signal F are used.

The battery pack 1 includes a communication controller 60 including a real time clock circuitry, an oscillator device 61 being a quartz crystal device outputting a frequency signal of 32 kHz and a transfer gate 64. Said transfer gate 64 might be a buffer or a switch. The transfer gate 64 is controlled by the communication controller 60 and is adapted to connect the oscillator device 61 to a physical frequency channel.

Dependent on a certain command C (the commands C are outputted from the main body 2 of the mobile terminal 3) received by the communication controller 60 via a physical data channel or depending on internal calculations of the communication controller 60, the communication controller 60 either opens or closes the transfer gate 64 and thus connects or disconnects the oscillator device 61 to or from the physical frequency channel.
Therefore, a frequency information signal F can be output on request to the main body 2 of a mobile terminal 3.

If the communication controller 60 detects that the battery pack 1 has been disconnected from the main body 2 as shown in Fig. 3, the transfer gate 64 is preferably closed to reduce the risk of a short circuit due to a frequency information signal F present on said physical frequency channel.

Figure 7 shows a fourth embodiment of the present invention where the command/data C, D and the frequency information signal F are sequentially transmitted via one common physical data/frequency channel, and an additional physical control channel transmitting an additional signal AS is used to switch between transmission of command/data C/D and the frequency information signal F.

A communication controller 70 including a real time clock circuitry and an oscillator device 71 are included in a battery pack 1 of a mobile terminal. Furthermore a switch control 72 and a switch 73 are provided in the battery pack 1. The switch 73 is adapted to respectively connect the communication controller 70 and the oscillator device 71 to said physical data/frequency channel for transmission of command/data C, D and a frequency information signal F, respectively. The switch control 72 is connected to said physical data channel and is adapted to switch the switch 73 in response to the additional signal AS received via said physical control channel, whereby said additional signal is outputted by the main body 2 of the mobile terminal 3.

Dependent on the input of the switch control 72 which is received from the main body 2, the switch 73 is set in a way, that either the communication controller 70 or the oscillator device 71 is connected to the physical data/frequency channel and thus either command/data C, D or a frequency information signal F are transmitted between the main body 2 and the battery pack 1 of the mobile terminal 3.

It is preferred that, if the additional signal AS is not present, the switch control 72 switches the switch 73 in a way, that the communication controller 70 is connected to the physical data/frequency channel to reduce the risk of short circuits due to unnecessary output of the frequency information signal F.

Figure 8 shows the implementation of a preferred embodiment of the present invention in a baseband chip 42 included in the main body 2 of a mobile terminal 3.

The baseband chip 42 includes a communication controller 80 capable of sending commands C to and receiving data D from a battery pack 1 of a mobile terminal 3 via a physical data channel. Furthermore, an input stage 81 comprising a buffer for the reception of a frequency information signal F outputted from the battery pack 1 via a physical frequency channel is implemented in the baseband chip 42. Both the physical data and physical frequency channel are realised by a pair of contacts 30 provided both on the battery pack 1 and the main body 2 of the mobile terminal 3, respectively. The frequency information signal F is sent directly to a real time clock circuitry 82 provided in the baseband chip 42, wherein said real time clock circuitry 82 is adapted to generate a time information signal based on the frequency information signal F supplied from the battery pack 1. Additionally, the frequency information F signal is sent to a switch 85. Further, an internal ring oscillator 84 is provided in the baseband chip 42. In addition, a comparator 83 comparing a frequency signal output by the internal ring oscillator 84 and the frequency information signal F is provided inside the baseband chip 42, wherein the comparator 83 is adapted to switch the switch 85.

Dependent on the detection algorithm (frequency signal outputted by the ring oscillator running quicker / faster than the frequency information signal F), the comparator 83 detects whether the frequency information signal F is present. Dependent on the comparison result, the switch 85 can be set by the comparator 83 in such a way that the baseband chip 42 has at least an inaccurate clock frequency signal CLF supply due to the internal ring oscillator 84.

As an internal ring oscillator 84 is provided in the main body 2 of a mobile terminal 3, even if the external frequency information signal F/FF is not available (e.g. if chattering of the contacts connecting the battery pack 1 to the main body 2 occurs, or after the mobile terminal has been switched off), at least an inaccurate frequency signal supply due to the internal ring oscillator 84 can be provided to the baseband chip 42.

Said inaccurate frequency signal information can be used e.g. to initialise / start the baseband chip when the mobile terminal is switched on.
It is emphasised that the internal ring oscillator 84 described in the present embodiment is only optional.

In this preferred embodiment, the baseband chip 42 is further adapted to adjust the internal ring oscillator 84 according to the frequency information signal F supplied by the battery pack 1 of the mobile terminal 3.

According to the preferred embodiment of a battery pack 1 shown in Fig. 5, the frequency information signal F and the command/data C/D are transmitted sequentially via one common physical data/frequency channel to minimise the number of necessary contacts 30.

Therefore, in the main body 2 of the mobile terminal in addition to the parts shown in Fig. 8, an additional switch (not shown) might be provided, respectively connecting the single physical data/frequency channel to the communication controller 80 and the input stage 81 of the baseband chip 42 depending on the kind of signal currently transmitted between the main body 2 and the battery pack 1 of the mobile terminal 3.
This additional switch might be implemented in the baseband chip 42.

Otherwise the one common physical data/frequency channel might be divided into two (not shown) parallel channels inside the main body 2 or inside the baseband chip 42 and be connected to both, the communication controller 80 and the input stage 81.

With the above described mobile terminals 3 according to the present invention it is of further advantage that, if the battery pack 1 comprises a first real time clock circuitry or a frequency counter receiving a frequency signal from an oscillator device included in said battery pack 1, the battery pack 1 is further adapted to sent upon request an initial value for a second real time clock circuitry 82 included in the baseband chip 42 of the main body 2 by transmitting an actual time signal or counter value from the battery pack 1 to the main body 2 of the mobile terminal 3, respectively. Said actual time signal or counter value might be output each time the battery pack 1 is reconnected to the main body 2 after it has been removed from the main body 2 of the mobile terminal 3, or regularly, or after an output of such a signal has been requested by the baseband chip 42 included in the main body 2 of the mobile terminal 3.

According to the present invention, it is possible to provide a mobile terminal 3 of a wireless telecommunication system, the mobile terminal 3 comprising at least a main body 2 and a battery pack 1 connectable to said main body 2, wherein frequency information F/FF is provided to the baseband chip 42 (main processor) of said mobile terminal 3 with reduced consumption of space and energy.
Furthermore, the number of parts and thus the costs of manufacturing said mobile terminal 3 are reduced.
It is a further advantage that no additional buffer battery is needed since said batteries frequently contain harmful materials and thus have to be disposed separately.

## Claims

1. A mobile terminal (3) of a wireless telecommunication system, the mobile terminal (2) comprising a main body (2) and a battery pack (1) connectable to said main body (2), wherein said battery pack (1) comprises at least an oscillator device (41; 51; 61; 71) providing a frequency signal and information transmission control means for controlling the transmission of information from said battery pack (1) to said main body (2), whereby said information transmission control means transmits a frequency information signal (F) on the basis of said frequency signal outputted from said oscillator device (41; 51; 61; 71) via at least one first physical channel from said battery pack (1) to a baseband chip (42) comprised in said main body (2).

2. A mobile terminal (3) according to claim 1,
**characterised in**
**that** a physical data channel for the transmission of commands/data (C, D) and a physical frequency channel for the transmission of the frequency information signal (F) between the main body (2) and the battery pack (1) are provided.

3. A mobile terminal (3) according to claim 2,
**characterised in**
**that** said information transmission control means further comprises a transfer gate (64) comprised in said battery pack (1), said transfer gate (64) connecting said oscillator device (61) to said physical frequency channel.

4. A mobile terminal (3) according to claim 2,
**characterised in**
**that** said information transmission control means further includes a communication controller (40; 60) for receiving commands (C) from said baseband chip (42) and sending data (D) to said baseband chip (42) via said physical data channel.

5. A mobile terminal (3) according to claim 4,
**characterised in**
**that** said communication controller (40) is further adapted to transmit the frequency information signal (F) to said baseband chip (42) contained in said main body (2) via said physical frequency channel.

6. A mobile terminal (3) according to claim 4,
**characterised in**
**that** said information transmission control means further comprises a transfer gate (64) comprised in said battery pack (1), said transfer gate (64) connecting said oscillator device (61) to said physical frequency channel, wherein said transfer gate (64) is controlled by said communication controller (60).

7. A mobile terminal (3) according to claim 1,
**characterised in**
**that** the frequency information signal (F) is transmitted together with command/data (C, D) via a physical data/frequency channel.

8. A mobile terminal (3) according to claim 7,
**characterised in**
**that** said information transmission control means includes a communication controller (50; 70) for receiving commands (C) from said baseband chip (42) and sending data (D) to said baseband chip (42) via said physical data/frequency channel.

9. A mobile terminal (3) according to claim 8,
**characterised in**
**that** said information transmission control means further comprises a switch (56; 73) selectively connecting said oscillator device (51; 71) and said communication controller (50; 70) to said physical data/frequency channel.

10. A mobile terminal (3) according to claim 9,
**characterised in**
**that** said information transmission control means further comprises a comparator (55) for comparing the output of the oscillator device (51) and the output of the switch (56) and for switching said switch (56) depending on the comparison result.

11. A mobile terminal (3) according to claim 10,
**characterised in**
**that** if said comparator (55) detects a mismatch of the frequency information signal (F) before and after the switch (56), the comparator switches said switch (56) in such a way that the communication controller (50) is connected to the physical data/frequency channel and the oscillator device (51) is removed from said physical data/frequency channel.

12. A mobile terminal (3) according to claim 9,
**characterised in**
**that** said switch (56; 73) is controlled by switching means included in the main body (2) of the mobile terminal (3).

13. A mobile terminal (3) according to claim 9,
**characterised in**
**that** said switch (56; 73) is controlled by said communication controller (50; 70).

14. A mobile terminal (3) according to claim 9,
**characterised in**
**that** a physical control channel for the transmission of additional signals (AS) is provided for connecting the main body (2) and the battery pack (1), and
**that** the information transmission control means further includes a switch control (72), wherein said switch control (72) is connected to said physical control channel and switches said switch (73) according to the additional signal (AS) received from the main body (2) via said physical control channel.

15. A mobile terminal (3) according to one of the preceding claims,
**characterised in**
**that** the information transmission control means detects if the battery pack (1) is disconnected from the main body (2) and stops the output of the frequency information signal (F) by the battery pack (1).

16. A mobile terminal (3) according to one of the preceding claims,
**characterised in**
**that** a frequency counter is provided in the battery pack (1), and
**that** a counter value of the frequency counter is transmitted from the battery pack (1) to the main body (2) of the mobile terminal (3).

17. A mobile terminal (3) according to claim 16,
**characterised in**
**that** an ID code of the frequency counter is transmitted in addition to the counter value from the battery pack (1) to the main body (2) of the mobile terminal (3).

18. A mobile terminal (3) according to one of the preceding claims,
**characterised in**
**that** a real time clock is provided in the battery pack, and
**that** a clock information of the real time clock is transmitted from the battery pack (1) to the main body (2) of the mobile terminal (3).

19. A mobile terminal (3) according to one of the preceding claims,
**characterised in**
**that** an internal ring oscillator (84) providing a low frequency signal to clock the baseband chip (42) is provided in the main body (2) of the mobile terminal (3).

20. A mobile terminal (3) according to claim 19,
**characterised in**
**that** said internal ring oscillator (84) is implemented in said baseband chip (42) included in said main body (2), said baseband chip (42) further comprising a communication controller (80) adapted to send and receive commands/data (C, D) to/from said battery pack (1), an input stage (81) adapted to buffer the frequency information signal (F, FF) received from said battery pack (1), a real time clock circuit (82) providing a clock signal based on an input frequency signal, a switch (85) and a comparator (83) adapted to switch said switch (85), wherein
said input stage (81) is connected to said switch (85) and said real time clock circuit (82),
said internal ring oscillator (84) is connected to said switch, and
said comparator (83) compares the output signal of the internal ring oscillator (84) and the frequency information signal (F) to switch said switch (85) depending on the comparison result.

21. A mobile terminal (3) according to claim 20,
**characterised in**
**that** the comparator (83) detects whether the frequency information signal (F, FF) received from said battery pack (1) is still present and correct.
